# EUROPÄISCHE PATENTSCHRIFT

(11) **EP 3 335 907 B1**
(45) Veröffentlichungstag und Bekanntmachung des Hinweises auf die Patenterteilung: **12.02.2020**
(21) Anmeldenummer: 17196088.3
(22) Anmeldetag: 12.10.2017
(51) Int. Cl.: B60C 11/03, B60C 11/11, B60C 11/13

(54) **FAHRZEUGLUFTREIFEN**
PNEUMATIC TYRE FOR A VEHICLE
PNEUMATIQUE DE VÉHICULE

(30) Priorität: 13.12.2016 DE 102016224805
(43) Veröffentlichungstag der Anmeldung: 20.06.2018
(73) Patentinhaber: Continental Reifen Deutschland GmbH, 30165 Hannover (DE)
(72) Erfinder: Zebian, Makram, 30175 Hannover (DE)
(74) Vertreter: Finger, Karsten

(56) Entgegenhaltungen:
- EP-A1- 2 113 399
- JP-A- 2000 233 607
- JP-A- 2006 044 469
- JP-A- 2007 106 295

## Beschreibung

Die Erfindung betrifft einen Fahrzeugluftreifen mit einem Laufstreifen, welcher zumindest eine aus Profilblöcken und zwischen diesen verlaufende Querrillen bestehende Profilblockreihe aufweist, welche nach einem Verfahren der Pitchlängenvariation in zumindest zwei unterschiedliche Pitchlängen aufweisende Pitches gegliedert ist, deren Aufeinanderfolge über den Reifenumfang gemäß einer geräuschoptimierten Pitchfolge erfolgt, wobei die Umfangslängen der Profilblöcke der zumindest einen Profilblockreihe innerhalb der unterschiedlichen Pitchlängen mit diesen variieren und wobei in Querrillen der zumindest einen Profilblockreihe Grundanhebungen ausgebildet sind.

Es ist bekannt, in Laufstreifen von Fahrzeugluftreifen Profilblockreihen vorzusehen, deren durch Querrillen voneinander getrennte Profilblöcke durch in den Querrillen ausgebildete Grundanhebungen in Umfangsrichtung aneinander angebunden sind. Solche Grundanhebungen verlaufen meist nur entlang eines gewissen Teils der Längserstreckung der Querrillen und versteifen die betreffende Profilblockreihe, insbesondere um die Handlingeigenschaften des Fahrzeugluftreifens in erwünschter Weise zu verbessern bzw. zu beeinflussen. Aus der JP 2006 044469 A ist beispielsweise ein Fahrzeugluftreifen der eingangs genannten Art bekannt, bei welchem die Grundanhebungen in jenen Querrillen, die zu einem Pitch kleinerer Pitchlänge gehören, eine kürzere Erstreckung entlang der Querrille aufweisen, als Grundanhebungen in Querrillen, die zu einem Pitch größerer Pitchlänge gehören.

Aus der JP 2007 106 295 A ist ein Fahrzeugluftreifen mit einem laufrichtungsgebunden ausgeführten Laufstreifen mit Profilblockreihen bekannt, welche in Pitches mit drei unterschiedlichen Pitchlängen gegliedert sind. Die Profilblöcke sind in Umfangsrichtung durch Querrillen voneinander getrennt und begrenzen diese mit Blockflanken. Bei jedem Profilblock ist die beim Abrollen des Reifens bei Vorwärtsfahrt zuerst in den Untergrund eintretende, "einlaufende" Blockflanke, im Querschnitt betrachtet, zur radialen Richtung unter einem größeren Winkel geneigt als die andere "auslaufende" Blockflanke. Ferner korreliert die Größe der Winkel, unter welchem die Blockflanken zur radialen Richtung geneigt sind, mit der jeweiligen Pitchlänge, wobei die Winkel umso größer sind je länger der jeweilige Pitch ist. Diese Maßnahmen sollen ein geringes Reifen-Fahrbahngeräusch ermöglichen.

Die JP 2000 233 607 A offenbart einen weiteren Fahrzeugluftreifen mit einem nach dem Verfahren der Pitchlängenvariation in Pitches gegliederten Laufstreifen, welcher Profilblockreihen mit Pitches mit sechs unterschiedlichen Pitchlängen aufweist. Die Pitchfolge ist insbesondere derart ausgeführt, dass die Pitchlängen über fünf aufeinanderfolgende Pitches von Pitch zu Pitch zunehmen und der sechste Pitch die kleinste Pitchlänge aufweist.

Aus der EP 2 113 399 A1 ist ein Fahrzeugluftreifen mit einem Laufstreifen bekannt, welcher im am Fahrzeug montierten Zustand eine der Fahrzeuginnenseite und eine der Fahrzeugaußenseite zugeordnete Laufstreifenhälfte aufweist. Der Laufstreifen ist derart gemäß einem Verfahren der Pitchlängenvariation in Pitches gegliedert, dass die der Fahrzeuginnenseite zugeordnete Laufstreifenhälfte 60 bis 80 Pitches und die der Fahrzeugaußenseite zugeordnete Laufstreifenhälfte 50 bis 70 Pitches umfasst, wobei Pitches mit zumindest vier unterschiedlichen Pitchlängen vorgesehen sind.

Um einen unregelmäßigen Abrieb zu vermeiden, werden oft in Pitchfolgen unmittelbare Aufeinanderfolgen von Profilblöcken, von welchen der eine zu einem Pitch mit der größten Pitchlänge und der andere zu einem Pitch mit der kürzesten Pitchlänge gehört, vermieden. Solche unmittelbaren Aufeinanderfolgen werden vor allem dann nicht in Betracht gezogen, wenn der Sprung in der Umfangssteifigkeit der unmittelbar aufeinanderfolgenden, unterschiedliche Umfangslängen aufweisenden Profilblöcke ein gewisses Limit überschreitet. Pitchfolgen werden üblicherweise rechnerisch ermittelt, so dass der Fall eintritt, dass eine geräuschmäßig optimale Pitchfolge solche Kombinationen enthalten würde. Dies macht es notwendig, bestimmte Aufeinanderfolgen von Pitches rechnerisch auszuschließen, obwohl es für das vom Laufstreifen verursachte Reifen-Fahrbahngeräusch günstiger wäre, solche Kombinationen beibehalten zu können.

Der Erfindung liegt somit die Aufgabe zugrunde, einen Fahrzeugluftreifen mit einem Laufstreifen derart auszuführen, dass bei einer Ausführung mit einer Pitchfolge mit mindestens zwei unterschiedlichen Pitchlängen möglich ist, Profilblöcke aufeinander folgen können, deren Umfangslängen stärker voneinander abweichen, ohne dass ein ungleichförmiger Abrieb zu befürchten ist. Auf diese Weise können die beim Abrollen des Reifens generierten Frequenzen auf breiteres Frequenzband verteilt und das Abrollgeräusch günstig beeinflusst werden. Auch die subjektive Wahrnehmung des Geräusches soll durch die Pitchfolge besser beeinflusst werden können.

Gelöst wird die gestellte Aufgabe erfindungsgemäß dadurch, dass in jenen Querrillen zwischen Profilblöcken, die zu Pitches unterschiedlicher Pitchlängen gehören, jeweils eine Grundanhebung ausgebildet ist, welche, in Umfangsrichtung betrachtet, zu dem zum kürzeren Pitch gehörenden Profilblock rampenförmig ansteigt.

Gemäß der Erfindung wird daher durch die rampenförmige Grundanhebung jener Profilblock, welcher die kleinere Umfangslänge hat, für sich gesehen versteift, so dass es, in Pitchfolgen mit mindestens zwei Pitchlängen, möglich ist, auch Profilblöcke unmittelbar aufeinander folgen zu lassen, die zum längsten und zum kürzesten vorgesehenen Pitch gehören. Dies erlaubt einen weiteren Freiheitsgrad bei der rechnerischen Ermittlung einer optimalen Pitchfolge und damit eine weitere günstige Beeinflussung des Abrollgeräusches ohne Einbußen beim Luftstreifenabrieb.

Bei einer bevorzugten Ausführungsform der Erfindung ist jede rampenförmige Grundanhebung unter einem Winkel von 5° bis 45°, insbesondere von 10° bis 30°, zur Umfangsrichtung geneigt, wobei dieser Winkel der Neigungswinkel einer, im Querschnitt durch die Querrille betrachtet, die Anbindungsstellen der Grundanhebung verbindenden Geraden ist. Die Neigung der Grundanhebungen wird daher an den gewünschten versteifenden Effekt angepasst. In Querrillen, welche Profilblöcke voneinander trennen, deren Umfangslängen stärker voneinander abweichen, wird dieser Neigungswinkel größer gewählt als in Querrillen zwischen Profilblöcken, deren Umfangslängen sich nur geringfügig voneinander unterscheiden.

Auch die Erstreckungslänge der Grundanhebungen entlang der Längserstreckung der Querrillen wirkt sich auf die versteifende Wirkung der rampenförmigen Grundanhebungen aus. Bevorzugt ist eine Ausführung der Erfindung, bei der jede rampenförmige Grundanhebung über 30 % bis 80 % der Erstreckungslänge der Querrille verläuft.

Bevorzugt werden ferner die gemäß der Erfindung vorgesehenen rampenförmigen Grundanhebungen derart innerhalb der Querrillen angeordnet, dass jede rampenförmige Grundanhebung, in Umfangsrichtung betrachtet, den Rillengrund der Querrille überspannt. Dabei kann vorgesehen sein, dass jede rampenförmige Grundanhebung an die Blockflanken beider Profilblöcke, zwischen welchen die Querrille verläuft, angebunden ist. Es kann jedoch auch vorgesehen sein, dass die rampenförmige Grundanhebung nur an die Blockflanke jenes Profilblockes angebunden sind, welcher zum Pitch mit der kleineren Pitchlänge gehört.

Die rampenförmigen Grundanhebungen sollen gezielt bestimmte Profilblöcke, wie bereits beschrieben, versteifen. In Querrillen, die zwischen Profilblöcken, die zu Pitches gleicher Pitchlänge gehören, verlaufen, werden daher bevorzugt keine rampenförmigen Grundanhebungen ausgebildet.

Von besonderem Vorteil ist die Erfindung in Laufstreifenprofilen, in welchen zumindest eine Profilblockreihe in zumindest drei unterschiedliche Pitchlängen aufweisende Pitches gegliedert ist. Erfindungsgemäß gestaltete Laufstreifenprofile können insbesondere Profilblockreihen aufweisen, die in bis zu neun unterschiedliche Pitchlängen aufweisende Pitches gegliedert sind.

Bei einer bevorzugten Ausführungsform der Erfindung ist jede rampenförmige Grundanhebung, im Querschnitt durch die Querrille betrachtet, gerade ausgeführt. Bei alternativen Ausführungsvarianten der Erfindung kann jede rampenförmige Grundanhebung, im Querschnitt durch die Querrille betrachtet, jedoch auch konvex oder konkav gekrümmt sein. Bei konvex oder konkav gekrümmter rampenförmiger Grundanhebung ist diese, im Querschnitt durch die Querrille betrachtet, bevorzugt kreisbogenförmig oder entlang eines Abschnittes einer Parabel oder einer Ellipse gekrümmt.

Weitere Merkmale, Vorteile und Einzelheiten der Erfindung werden nun anhand der schematischen Zeichnung, die ein Ausführungsbeispiel darstellt, näher beschrieben. Dabei zeigen
Fig. 1 eine Draufsicht auf einen Umfangsbereich eines Laufstreifens eines Fahrzeugluftreifens und
Fig. 2 eine Seitenansicht eines in die Ebene projizierten Umfangsabschnittes einer Profilblockreihe.

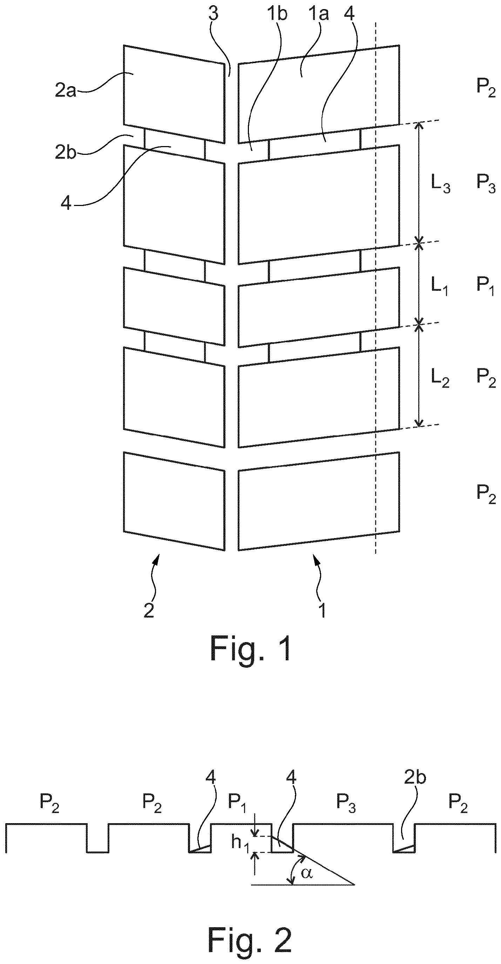

Gemäß der Erfindung ausgeführte Fahrzeugluftreifen können Fahrzeugluftreifen für PKWs, Vans, SUVs, Light Trucks, Nutzfahrzeuge oder Busse sein. Fig. 1 zeigt von der Laufstreifenprofilierung eines beliebigen Fahrzeugluftreifens einige Profilblöcke 1a einer schulterseitig gelegenen Blockreihe 1 und jeweils einige Profilblöcke 2a einer weiteren Blockreihe 2, welche durch eine Umfangsrille 3 von der schulterseitigen Blockreihe 1 getrennt ist. Die weiteren nicht dargestellten Profilstrukturen können Blockreihen sein oder auf sonstige Weise blockartig oder rippenartig ausgestaltet sein. Die Profilblöcke 1a sind in Umfangsrichtung voneinander durch Querrillen 1b, die Profilblöcke 2a durch Querrillen 2b voneinander getrennt. Der Laufstreifen ist, wie es üblich ist, zur Erzielung eines unauffälligen und möglichst leisen Abrollgeräusches nach einem Verfahren der Pitchlängenvariation ausgelegt. Unter einem Pitch wird ein Profilschritt bzw. ein Profilabschnitt verstanden, welcher sich über den Reifenumfang innerhalb eines Umfangsbereiches in gleichartiger Ausführung wiederholt, wobei die Pitches meist in zwei bis fünf unterschiedlichen Umfangslängen vorgesehen sind. In einem Laufstreifen mit Blockreihen oder blockartigen Strukturen besteht ein Pitch aus je einem Block aus jeder Reihe und einer der an diesen anschließenden Querrille. Die für das Entstehen des Reifen-Fahrbahngeräusches maßgeblich verantwortliche Aufeinanderfolge der Pitches über den Reifenumfang, die Pitchfolge, wird üblicherweise rechnerunterstützt ermittelt.

Der in Fig. 1 beispielhaft gezeigte, vereinfachte Umfangsbereich eines Laufstreifenprofils setzt sich aus drei Pitches P₁, P₂, P₃ mit jeweils unterschiedlichen Pitchlängen L₁, L₂, L₃ zusammen, wobei L₁< L₂< L₃ ist. Bei der gezeigten vereinfachten Ausführung weisen die Profilblöcke 1a, 2a gemäß den Pitchlängen L₁, L₂, L₃ variierende Umfangslängen auf, sodass ein Profilblock 1a, 2a im Pitch P₁ die geringste und ein Profilblock 1a, 2a im Pitch P₃ die größte Umfangslänge besitzt. Bei der gezeigten vereinfachten Ausführung weisen die Querrillen 1b, 2b zwischen den Profilblöcken 1a, 2a übereinstimmende Breiten auf, wobei es in der Praxis üblich ist, die Breite von Querrillen derart auszulegen, dass die zu einem Pitch P₁ mit der kleinsten Umfangslänge L₁ gehörenden Querrillen die geringste Breite und die zu einem Pitch P₃ mit der größten Umfangslänge L₃ gehörenden Querrillen die größte Breite aufweisen.

Das Verhältnis der Umfangslängen L₁, L₂, L₃ zueinander, welches jedoch für die gegenständliche Erfindung nicht von Belang ist, kann beispielsweise 1:1,18:1,38 betragen.

Wie Fig. 1 zeigt, enthält die Abfolge der Pitches P₁, P₂, P₃ Abfolgekonstellationen, bei welchen ein Pitch P₃ mit der größten Pitchlänge L₃ unmittelbar auf ein Pitch P₁ mit der kleinsten Pitchlänge L₁ folgt, und bei welchen auch Pitches P₂ gleicher Pitchlänge L₂ unmittelbar aufeinander folgen, ferner ein Aufeinanderfolgen von Pitches P₂ und P₃ sowie von Pitches P₁ und P₂. In der Pitchfolge können auch zwei Pitches P₃ oder zwei Pitches P₁ unmittelbar aufeinanderfolgen. Wie Fig.1 zeigt sind in jenen Querrillen 1b, 2b, die zwischen Profilblöcken 1a, 2a verlaufen, die zu unterschiedlichen Pitchlängen L₁, L₂, L₃ aufweisenden Pitches P₁, P₂, P₃ gehören, Grundanhebungen 4 ausgebildet, die, wie Fig. 2 zeigt, in Umfangsrichtung rampenartig geneigt sind. Es ist daher in jenen Querrillen 1b, 2b, die zwischen Profilblöcken 1a, 2a verlaufen, die zu Pitches P₁, P₂, P₃ gleicher Pitchlänge L₁, L₂, L₃ gehören, keine rampenförmige Grundanhebung 4 vorgesehen.

Bei der dargestellten bevorzugten Ausführung verlaufen die rampenförmigen Grundabhebungen 4, im Querschnitt durch die Querrillen 1b, 2b betrachtet, im Wesentlichen gerade. Bei alternativen Ausführungen können die rampenförmigen Grundanhebungen 4, im Querschnitt durch die Querrillen 1b, 2b betrachtet, auch konvex oder konkav gekrümmt sein. Die Neigung der rampenförmigen Grundanhebungen 4 relativ zur Umfangsrichtung ist ferner derart, dass sie die größere radiale Höhe h₁ bei jenem Profilblock 1a, 2a aufweisen, der zum Pitch mit der kleineren Pitchlänge gehört. Der Neigungswinkel α der rampenförmigen Grundanhebungen 4 relativ zur Umfangsrichtung, welcher entlang einer, im Querschnitt durch die Querrillen 1b, 2b betrachtet, die Anbindungsstellen der Grundanhebungen 4 verbindenden Geraden ermittelt wird, kann variieren, vorzugsweise in einem Bereich von 5° bis 45°, insbesondere von 10° bis 30°. In Querrillen 1b, 2b zwischen den Profilblöcken 1a, 2a, von welchen der eine zu einem Pitch P₁ und der andere zu einem Pitch P₃ gehören, wird der Winkel α größer gewählt als bei Grundanhebungen 4, die in Querrillen 1b, 2b ausgebildet sind, die zu Pitches gehören, die bezüglich ihrer Pitchlängen aufeinander folgen. Die rampenförmigen Grundanhebungen 4 sind bei der bevorzugten Ausführung nur an die Blockflanke jenes Profilblockes 1a, 2a angebunden, der zu dem Pitch mit der kleineren Pitchlänge gehört, beim benachbarten Profilblock 1a, 2a beginnen die rampenförmigen Grundanhebungen 4 im Bereich des Überganges des Querrillengrundes zur Blockflanke.

In der Erstreckungsrichtung der Querrillen 1b, 2b verlaufen die rampenförmigen Grundanhebungen 4 über 30% bis 80% der Querrillenerstreckung.

Durch die gemäß der Erfindung vorgesehenen und rampenförmig zur Umfangsrichtung geneigten Grundanhebungen 4 können Steifigkeitsänderungen in Umfangsrichtung bei einer Aufeinanderfolge von Profilblöcken, die sich in ihren Umfangslängen stärker unterscheiden, ausgeglichen werden. Diese Maßnahme eröffnet die Möglichkeit, Pitchfolgen derart auszulegen, dass beispielsweise bei einer Pitchlängenvariation mit drei unterschiedlichen Pitchlängen auch Pitches der kleinsten Umfangslänge auf Pitches der größten Umfangslänge folgen können ohne Nachteile im Abrieb durch "Steifigkeitssprünge" in Kauf nehmen zu müssen.

### Bezugsziffernliste

- 1, 2: Blockreihe
- 1a, 2a: Profilblock
- 1b, 2b: Querrille
- 3: Umfangsrille
- 4: Grundanhebung
- P₁, P₂, P₃: Pitch
- L₁, L₂, L₃: Pitchlänge
- h₁: Höhe
- α: Winkel

## Patentansprüche

1. Fahrzeugluftreifen mit einem Laufstreifen, welcher zumindest eine aus Profilblöcken (1a, 2a) und zwischen diesen verlaufende Querrillen (1b, 2b) bestehende Profilblockreihe (1, 2) aufweist, welche nach einem Verfahren der Pitchlängenvariation in zumindest zwei unterschiedliche Pitchlängen (L₁, L₂, L₃) aufweisende Pitches (P₁, P₂, P₃) gegliedert ist, deren Aufeinanderfolge über den Reifenumfang gemäß einer geräuschoptimierten Pitchfolge erfolgt, wobei die Umfangslängen der Profilblöcke (1a, 2a) der zumindest einen Profilblockreihe (1, 2) innerhalb der unterschiedlichen Pitchlängen (L₁, L₂, L₃) mit diesen variieren und wobei in Querrillen (1b, 2b) der zumindest einen Profilblockreihe (1, 2) Grundanhebungen (4) ausgebildet sind,
**dadurch gekennzeichnet,**
**dass** in jenen Querrillen (1b, 2b) zwischen Profilblöcken (1a, 2a), die zu Pitches (P₁, P₂, P₃) unterschiedlicher Pitchlängen (L₁, L₂, L₃) gehören, jeweils eine Grundanhebung (4) ausgebildet ist, welche, in Umfangsrichtung betrachtet, zu dem zum kürzeren Pitch (P₁, P₂) gehörenden Profilblock (1a, 2a) rampenförmig ansteigt.

2. Fahrzeugluftreifen nach Anspruch 1, **dadurch gekennzeichnet, dass** jede rampenförmige Grundanhebung (4) unter einem Winkel (a) von 5° bis 45°, insbesondere von 10° bis 30°, zur Umfangsrichtung geneigt ist, wobei der Winkel (a) der Neigungswinkel einer, im Querschnitt durch die Querrille (1b, 2b) betrachtet, die Anbindungsstellen der Grundanhebung (4) verbindenden Geraden ist.

3. Fahrzeugluftreifen nach Anspruch 1 oder 2, **dadurch gekennzeichnet, dass** jede rampenförmige Grundanhebung (4) über 30% bis 80% der Erstreckungslänge der Querrille (1b, 2b) verläuft.

4. Fahrzeugluftreifen nach einem der Ansprüche 1 bis 3, **dadurch gekennzeichnet, dass** jede rampenförmige Grundanhebung (4), in Umfangsrichtung betrachtet, den Rillengrund der Querrille (1b, 2b) überspannt.

5. Fahrzeugluftreifen nach einem der Ansprüche 1 bis 4, **dadurch gekennzeichnet, dass** jede rampenförmige Grundanhebung (4) nur an die Blockflanke jenes Profilblockes (1a, 1b) angebunden ist, welcher zum Pitch mit der kleineren Pitchlänge gehört.

6. Fahrzeugluftreifen nach einem der Ansprüche 1 bis 5, **dadurch gekennzeichnet, dass** in Querrillen (1b, 2b), die zwischen Profilblöcken (1a, 2a), die zu Pitches (P₁, P₂, P₃) gleicher Pitchlänge (L₁, L₂, L₃) gehören, verlaufen, keine rampenförmigen Grundanhebungen (4) ausgebildet sind.

7. Fahrzeugluftreifen nach einem der Ansprüche 1 bis 6, **dadurch gekennzeichnet, dass** die zumindest eine Profilblockreihe (1, 2) in zumindest drei unterschiedliche Pitchlängen (L₁, L₂, L₃) aufweisende Pitches (P₁, P₂, P₃) gegliedert ist.

8. Fahrzeugluftreifen nach einem der Ansprüche 1 bis 6, **dadurch gekennzeichnet, dass** die zumindest eine Profilblockreihe (1, 2) in bis zu neun unterschiedliche Pitchlängen aufweisende Pitches gegliedert ist.

9. Fahrzeugluftreifen nach einem der Ansprüche 1 bis 8, **dadurch gekennzeichnet, dass** jede rampenförmige Grundanhebung (4), im Querschnitt durch die Querrille (1b, 2b) betrachtet, gerade ist oder konvex oder konkav gekrümmt ist.

10. Fahrzeugluftreifen nach einem der Ansprüche 1 bis 9, **dadurch gekennzeichnet, dass** jede rampenförmige Grundanhebung (4), im Querschnitt durch die Querrille (1b, 2b) betrachtet, kreisbogenförmig oder entlang eines Abschnittes einer Parabel oder einer Ellipse gekrümmt ist.

## Claims

1. Pneumatic vehicle tyre with a tread, which has at least one row of profile blocks (1, 2), which consists of profile blocks (1a, 2a) and transverse grooves (1b, 2b) running between them and which is divided by a process of pitch length variation into at least two pitches (P₁, P₂, P₃) having different pitch lengths (L₁, L₂, L₃), the sequence of which over the circumference of the tyre takes place in accordance with a noise-optimized pitch sequence, wherein the circumferential lengths of the profile blocks (1a, 2a) of the at least one row of profile blocks (1, 2) within the different pitch lengths (L₁, L₂, L₃) vary with these lengths and wherein, in transverse grooves (1b, 2b) of the at least one row of profile blocks (1, 2), base elevations (4) are formed,
**characterized**
**in that** in those transverse grooves (1b, 2b) between profile blocks (1a, 2a) that belong to pitches (P₁, P₂, P₃) of different pitch lengths (L₁, L₂, L₃) there is formed in each case a base elevation (4) which, seen in the circumferential direction, rises up in the form of a ramp to the profile block (1a, 2a) belonging to the shorter pitch (P₁, P₂).

2. Pneumatic vehicle tyre according to Claim 1, **characterized in that** each ramp-shaped base elevation (4) is inclined in relation to the circumferential direction at an angle (α) of 5° to 45°, in particular of 10° to 30°, wherein the angle (α) is the angle of inclination of a straight line which, seen in the cross section through the transverse groove (1b, 2b), r joins the points of attachment of the base elevation (4) .

3. Pneumatic vehicle tyre according to Claim 1 or 2, **characterized in that** each ramp-shaped base elevation (4) runs over 30% to 80% of the length of extent of the transverse groove (1b, 2b).

4. Pneumatic vehicle tyre according to one of Claims 1 to 3, **characterized in that** each ramp-shaped base elevation (4), seen in the circumferential direction, spans the groove base of the transverse groove (1b, 2b).

5. Pneumatic vehicle tyre according to one of Claims 1 to 4, **characterized in that** each ramp-shaped base elevation (4) is only attached to the block flank of each profile block (1a, 1b) that belongs to the pitch with the smaller pitch length.

6. Pneumatic vehicle tyre according to one of Claims 1 to 5, **characterized in that** no ramp-shaped base elevations (4) are formed in transverse grooves (1b, 2b) which run between profile blocks (1a, 2a) that belong to pitches (P₁, P₂, P₃) of the same pitch length (L₁, L₂, L₃).

7. Pneumatic vehicle tyre according to one of Claims 1 to 6, **characterized in that** the at least one row of profile blocks (1, 2) is divided into at least three pitches (P₁, P₂, P₃) having different pitch lengths (L₁, L₂, L₃).

8. Pneumatic vehicle tyre according to one of Claims 1 to 6, **characterized in that** the at least one row of profile blocks (1, 2) is divided into up to nine pitches having different pitch lengths.

9. Pneumatic vehicle tyre according to one of Claims 1 to 8, **characterized in that** each ramp-shaped base elevation (4), seen in the cross section through the transverse groove (1b, 2b), is straight or is convexly or concavely curved.

10. Pneumatic vehicle tyre according to one of Claims 1 to 9, **characterized in that** each ramp-shaped base elevation (4), seen in the cross section through the transverse groove (1b, 2b), is curved in the form of an arc of a circle or curved along a portion of a parabola or an ellipse.

## Revendications

1. Bandage pneumatique de véhicule, comprenant une bande de roulement qui possède au moins une rangée de blocs profilés (1, 2), composée de blocs profilés (1a, 2a) et de rainures transversales (1b, 2b) qui s'étendent entre ceux-ci et qui est divisée selon un procédé de variation de longueur de pas en des pas (P₁, P₂, P₃) qui présentent au moins deux longueurs de pas (L₁, L₂, L₃) différentes, dont la succession sur le pourtour du bandage s'effectue selon une séquence de pas avec optimisation du bruit, les longueurs périphériques des blocs profilés (1a, 2a) de l'au moins une rangée de blocs profilés (1, 2) à l'intérieur des différentes longueurs de pas (L₁, L₂, L₃) variant avec celles-ci et des rehausses du fond (4) étant formées dans les rainures transversales (1b, 2b) de l'au moins une rangée de blocs profilés (1, 2),
**caractérisé en ce**
**qu'**une rehausse du fond (4) est à chaque fois formée dans les rainures transversales (1b, 2b) entre les blocs profilés (1a, 2a) qui font partie de pas (P₁, P₂, P₃) ayant des longueurs de pas (L₁, L₂, L₃) différentes, laquelle, vue dans la direction périphérique, s'élève en forme de rampe vers le bloc profilé (1a, 2a) qui fait partie du pas le plus court (P₁, P₂).

2. Bandage pneumatique de véhicule selon la revendication 1, **caractérisé en ce que** chaque rehausse du fond (4) en forme de rampe est inclinée selon un angle (α) de 5° à 45°, notamment de 10° à 30°, par rapport à la direction périphérique, l'angle (a) étant l'angle d'inclinaison d'une droite qui, vue en section transversale à travers la rainure transversale (1b, 2b), relie les points d'attache de la rehausse du fond (4).

3. Bandage pneumatique de véhicule selon la revendication 1 ou 2, **caractérisé en ce que** chaque rehausse du fond (4) en forme de rampe suit un tracé sur 30 % à 80 % de la longueur de projection de la rainure transversale (1b, 2b).

4. Bandage pneumatique de véhicule selon l'une des revendications 1 à 3, **caractérisé en ce que** chaque rehausse du fond (4) en forme de rampe, vue dans la direction périphérique, enjambe le fond de rainure de la rainure transversale (1b, 2b).

5. Bandage pneumatique de véhicule selon l'une des revendications 1 à 4, **caractérisé en ce que** chaque rehausse du fond (4) en forme de rampe est seulement attachée au flanc de bloc de chaque bloc profilé (1a, 2a) qui fait partie du pas ayant la longueur de pas la plus petite.

6. Bandage pneumatique de véhicule selon l'une des revendications 1 à 5, **caractérisé en ce qu'**aucune rehausse du fond (4) en forme de rampe n'est formée dans les rainures transversales (1b, 2b) qui suivent un tracé entre les blocs profilés (1a, 2a) faisant partie des pas (P₁, P₂, P₃) ayant la même longueur de pas (L₁, L₂, L₃).

7. Bandage pneumatique de véhicule selon l'une des revendications 1 à 6, **caractérisé en ce que** l'au moins une rangée de blocs profilés (1, 2) est divisée en des pas (P₁, P₂, P₃) qui présentent au moins trois longueurs de pas (L₁, L₂, L₃) différentes.

8. Bandage pneumatique de véhicule selon l'une des revendications 1 à 6, **caractérisé en ce que** l'au moins une rangée de blocs profilés (1, 2) est divisée en des pas qui présentent jusqu'à neuf longueurs de pas différentes.

9. Bandage pneumatique de véhicule selon l'une des revendications 1 à 8, **caractérisé en ce que** chaque rehausse du fond (4) en forme de rampe, vue en section transversale à travers la rainure transversale (1b, 2b), est droite ou courbée convexe ou concave.

10. Bandage pneumatique de véhicule selon l'une des revendications 1 à 9, **caractérisé en ce que** chaque rehausse du fond (4) en forme de rampe, vue en section transversale à travers la rainure transversale (1b, 2b), est en forme d'arc de cercle ou courbée le long d'une portion d'une parabole ou d'une ellipse.
